(19) **Europäisches Patentamt**
**European Patent Office**
**Office européen des brevets**

(11) **EP 4 083 586 A1**

(12) **EUROPEAN PATENT APPLICATION**

(43) Date of publication:
**02.11.2022 Bulletin 2022/44**

(21) Application number: **21171732.7**

(22) Date of filing: **01.05.2021**

(51) International Patent Classification (IPC):
***G01H 5/00*** *(2006.01)* ***G01N 29/04*** *(2006.01)*

(52) Cooperative Patent Classification (CPC):
**G01H 5/00; G01N 29/04**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hochschule für angewandte Wissenschaften Landshut**
**84036 Landshut (DE)**

(72) Inventor: **IVANOV, Artem**
**84032 Landshut (DE)**

(74) Representative: **Koplin, Moritz**
**Anne-Conway-Straße 1**
**28359 Bremen (DE)**

(54) **SYSTEM AND METHOD FOR THE DETERMINATION OF OBJECT PROPERTIES**

(57) Provided is a system for determining properties of an object and a corresponding method. The system comprises a first device which is configured to determine a first sound particle velocity along a first straight line, the first straight line intersecting with a surface of the object at a first point and being perpendicular to the surface or to a tangent plane to the surface at the first point.

The system further comprising a second device which is configured to determine a second sound particle velocity along a second straight line, the second straight line intersecting with a surface of the object at a second point and being perpendicular to the surface or to a tangent plane to the surface at the second point.

Fig. 2

## Description

FIELD

The present disclosure relates to the determination of object properties. More particularly, the present disclosure relates to the determination of properties of an object where the object properties are quantitatively and/or qualitatively assessed based on the mechanical behavior of the object and specifically the mechanical behavior of the object surface while the object is excited to vibrate (e.g., a transient or static vibrational pattern).

BACKGROUND

Analyzing characteristics of a vibrating object may be helpful in assessing various object properties. However, measuring vibrations can be challenging if, for instance, attaching sensors to the object surface would have an undue influence on the mode of vibration.

SUMMARY

The present invention is directed at a system for determining properties of an object and a method of determining properties of an object.

The system comprises a first device which is configured to determine a first sound particle velocity along a first straight line, the first straight line intersecting with a surface of the object at a first point and being perpendicular to the surface or to a tangent plane to the surface at the first point.

The system may further comprise a second device which is configured to determine a second sound particle velocity along a second straight line, the second straight line intersecting with a surface of the object at a second point and being perpendicular to the surface or to a tangent plane to the surface at the second point.

The system may further comprise a third device which is configured to determine a third sound particle velocity along a third straight line, the third straight line intersecting with a surface of the object at a third point and being perpendicular to the surface or to a tangent plane to the surface at the third point.

The system may further comprise a fourth device which is configured to determine a fourth sound particle velocity along a fourth straight line, the fourth straight line intersecting with a surface of the object at a fourth point and being perpendicular to the surface or to a tangent plane to the surface at the fourth point.

A distance between the devices and the surface may be substantially the same. I.e., the distance between the first device and the surface (along the first straight line) may be substantially the same as the distance between the second device and the surface (along the second straight line).

The system may further comprise a transducer that converts electrical energy into mechanical energy and excites the object or the object surface to vibrate. Notably, the object or the surface of the object may also be excited to vibrations by use of the object (if, for example, the object is a musical instrument) or by its operation (if, for example, the object is a machine).

Said distance may be adjustable with regard to an expected or particularly interesting frequency or frequency range. For example, the distance may be less than (e.g., 75%, 50%, 25%, 10% of) a wavelength of an expected or particularly interesting frequency or less than (e.g., 75%, 50%, 25%, 10% of) an upper limit of an expected or particularly interesting frequency range. For example, the frequency may relate to the transducer or to the use or to the operation of the object and may be close to or may include a resonance frequency (eigenfrequency) of the object and/or harmonics thereof. For musical instruments, for example, the frequency range may correspond to the hearing range or to the range of the instrument.

Moreover, the formulation "properties of an object", as used throughout the description and the claims, particularly refers to physical properties such as a modulus of elasticity. Notably, detecting a deviation of a physical property of an object from an intended range or value may be used in quality control. For instance, a defect may be detected by determining a (sudden and/or significant) deviation of a physical property at the site of (or close to) the defect. Furthermore, the formulation "sound particle velocity", as used throughout the description and the claims, particularly refers the velocity of the parcels of a fluid (such as air) through which the sound wave propagates. In addition, the formulation "sound particle velocity along a straight line", as used throughout the description and the claims, particularly refers to a velocity component of the sound particles that is collinear with the straight line.

Determining the sound particle velocity close to the surface of the object allows for a contactless determination of the object properties. The contactless determination of the object properties may be particularly helpful if attaching a sensor to the surface of the object might distort or unduly influence the mechanical behavior of the object or of the object surface when the object is excited to vibrate.

The first device, the second device, the third device, and the fourth device may be arranged (equidistantly) along a straight line (which may be parallel or tangent to the object surface), or at the corners of a rectangle or of a square (the edges of which may also be parallel or tangent to the object surface). The first straight line and the second straight line may lie in a first plane and the third straight line and the fourth straight line may lie in the first plane or in a second plane. The first plane and the second plane may be parallel.

In other words, the devices may be used to establish a measurement grid that allows for a simultaneous determination of object properties at different surface areas of the object. Hence, instead of scanning the different areas, all areas may be measured or monitored in parallel. The measurement grid may allow a simultaneous measurement of two sides of the object or (substantially) of a whole outer surface of the object. Depending on the object geometry and the size of cut-outs and/or of an interior space of the object, the measurement grid may also cover an inner surface of the object.

The devices may not be directly attached to the object. If the object has an attachment portion to which the devices may be attached without distorting or unduly influencing the vibrational behavior of the object, the devices, or a frame to which the devices are mounted may be mounted to the attachment portion. A damper may be provided between the attachment portion and the devices or the frame to minimize the influence of the devices on the vibrational behavior of the object. Moreover, the frame may be provided with sensors (e.g., distance, velocity, or acceleration sensors) which allow determining the movement of the frame relative to a (static) reference. The signals of said sensors may then be used to compensate the (determined) sound particle velocity for the (effect of the) frame movement.

The first device may comprise an acoustic sensor which is configured to measure the sound particle velocity directly. However, the sound particle velocity may also be determined based on measurements of two acoustic sensors. For example, the first device may comprise a first acoustic sensor and a second acoustic sensor. The first acoustic sensor may have a first membrane and the second acoustic sensor may have a second membrane. The first membrane and the second membrane may be parallel to each other. The first membrane and the second membrane may be parallel to the first straight line.

A first signal provided by the first acoustic sensor may be indicative of a pressure exerted on the first acoustic sensor (e.g., the first signal provided by the first acoustic sensor may be indicative of a pressure exerted on the first membrane) and a second signal provided by the second acoustic sensor may be indicative of a pressure exerted on the second acoustic sensor (e.g., the second signal provided by the second acoustic sensor may be indicative of a pressure exerted on the second membrane).

In this regard, the term "membrane", as used throughout the description, particularly refers to a (thin) planar material layer which deforms under mechanic force such as mechanic pressure variations caused by acoustic waves. For example, the first sensor and the second sensor may be acoustic pressure sensors. Moreover, the first sensor and the second sensor maybe omnidirectional.

Using two acoustic sensors that measure pressure variations caused by acoustic waves instead of using an acoustic sensor that measures the sound particle velocity directly may reduce the overall cost of the system as miniaturized acoustic pressure sensors are readily available at reasonable quality and low cost.

The first device may comprise circuitry to derive a first difference signal based on the first signal and the second signal.

For example, the first device may comprise a processor that receives the first signal and the second signal as input and calculates the difference signal by subtracting (numerical) values representing the first signal from (numerical) values representing the second signal or by subtracting (numerical) values representing the second signal from (numerical) values representing the first signal.

The (numerical) values representing the difference signal may then be divided by a distance between the first sensor and the second sensor to derive a signal that is proportional to the sound pressure gradient. The proportionality factor maybe determined during a calibration.

The system may be configured to determine a movement of the surface at the first point based on the first difference signal.

For instance, the (numerical) values representing the signal that is proportional to the sound pressure gradient may be integrated twice over time to determine the movement. Alternatively, the (numerical) values representing the first signal and the second signal may be integrated twice over time and the difference signal may be determined by subtracting the (numerical) values representing the integrated values from one another. Notably, integration may also be achieved by low-pass filtering and the constants of integration may be determined or eliminated by high-pass filtering the integrated signal.

The second device may comprise a third acoustic sensor and a fourth acoustic sensor. The third acoustic sensor may have a third membrane and the fourth acoustic sensor may have a fourth membrane. The third membrane and the fourth membrane may be parallel to each other. The third membrane and the fourth membrane may be parallel to the second straight line. The third sensor and the fourth sensor may be acoustic pressure sensors. Moreover, the third sensor and the fourth sensor may be omnidirectional.

A third signal provided by the third acoustic sensor may be indicative of a pressure exerted on the third acoustic sensor (e.g., the third signal provided by the third acoustic sensor may be indicative of a pressure exerted on the third membrane) and a fourth signal provided by the fourth acoustic sensor may be indicative of a pressure exerted on the fourth acoustic sensor (e.g., the fourth signal provided by the fourth acoustic sensor may be indicative of a pressure exerted on the fourth membrane).

The second device may comprise circuitry to derive a second difference signal based on the third signal and the fourth signal. The circuitry of the second device may be identical in construction to the circuitry of the first device.

The system may be further configured to determine a movement of the surface at the second point based on the second difference signal.

The determination of the movement of the surface at the second point may be analogously to the determination of the movement of the surface at the first point.

The system may be further configured to approximate a movement of the surface between the first point and the second point based on the movement of the surface at the first point and the movement of the surface at the second point.

For example, the system may be configured to interpolate the movement of the surface between the first point and the second point based on the movement of the surface at the first point and the movement of the surface at the second point.

The system may be configured to apply a Fourier transformation to the first signal and to the second signal or to the difference signal.

Applying a Fourier transformation to the first signal and to the second signal or to the difference signal may allow separately analyzing different harmonics.

The method comprises determining a first sound particle velocity along a first straight line which intersects with a surface of the object at a first point, and which is perpendicular to the surface or to a tangent plane to the surface at the first point.

The method may further comprise determining a second sound particle velocity along a second straight line which intersects with a surface of the object at a second point, and which is perpendicular to the surface or to a tangent plane to the surface at the second point.

The method may further comprise determining a third sound particle velocity along a third straight line which intersects with a surface of the object at a third point, and which is perpendicular to the surface or to a tangent plane to the surface at the third point.

The method may further comprise determining a fourth sound particle velocity along a fourth straight line which intersects with a surface of the object at a fourth point, and which is perpendicular to the surface or to a tangent plane to the surface at the fourth point.

The first straight line and the second straight line may lie in a first plane and the third straight line and the fourth straight line may lie in the first plane or in a second plane. The first plane and the second plane may be parallel.

Determining the first sound particle velocity along the first straight line may comprise providing a first acoustic sensor and a second acoustic sensor. The first acoustic sensor may have a first membrane and the second acoustic sensor may have a second membrane. The first membrane and the second membrane may be parallel to each other. The first membrane and the second membrane may be parallel to the first straight line. As noted above, the first sensor and the second sensor may be (omnidirectional) acoustic pressure sensors. Furthermore, the first sensor and the second sensor may be mounted to a common frame so that a distance between the first sensor and the second sensor remains constant while measuring.

A first signal provided by the first acoustic sensor may be indicative of a pressure exerted on the first acoustic sensor (e.g., the first signal provided by the first acoustic sensor may be indicative of a pressure exerted on the first membrane) and a second signal provided by the second acoustic sensor may be indicative of a pressure exerted on the second acoustic sensor (e.g., the second signal provided by the second acoustic sensor may be indicative of a pressure exerted on the second membrane).

The first signal may be a first voltage and the second signal may be a second voltage.

The method may further comprise deriving a first difference signal based on the first signal and the second signal.

The first difference signal may correspond to a voltage difference between the first voltage and the second voltage.

The method may further comprise determining a movement of the surface at the first point based on the first difference signal.

The movement may be caused by vibrations. Due to the vibrations, the surface area around the first point may travel towards the first sensor and away from the first sensor but otherwise exhibit no movement relative to the first sensor. Consequently, the surface area around the first point may also travel towards the second sensor and away from the second sensor but otherwise exhibit no movement relative to the second sensor.

Determining the second sound particle velocity along the second straight line may comprise providing a third acoustic sensor and a fourth acoustic sensor. The third acoustic sensor may have a third membrane and the fourth acoustic sensor may have a fourth membrane. The third membrane and the fourth membrane may be parallel to each other. The third membrane and the fourth membrane may be parallel to the second straight line. As noted above, the third sensor and the fourth sensor may be (omnidirectional) acoustic pressure sensors. Furthermore, the third sensor and the fourth sensor may be mounted to a/the common frame so that a distance between the third sensor and the fourth sensor remains constant while measuring.

A third signal provided by the third acoustic sensor may be indicative of a pressure exerted on the third acoustic sensor (e.g., the third signal provided by the third acoustic sensor may be indicative of a pressure exerted on the third membrane) and a fourth signal provided by the fourth acoustic sensor may be indicative of a pressure exerted on the fourth acoustic sensor (e.g., he fourth signal provided by the fourth acoustic sensor may be indicative of a pressure exerted on the fourth membrane).

The third signal may be a third voltage and the fourth signal may be a fourth voltage.

The method may further comprise deriving a second difference signal based on the third signal and the fourth signal and determining a movement of the surface at the second point based on the second difference signal.

The second difference signal may correspond to a voltage difference between the third voltage and the fourth voltage.

The method may further comprise determining a movement of the surface at the second point based on the second difference signal.

As noted above, the movement may be caused by vibrations. Due to the vibrations, the surface area around the second point may travel towards the third sensor and away from the third sensor but otherwise exhibit no movement relative to the third sensor. Consequently, the surface area around the second point may travel towards the fourth sensor and away from the fourth sensor but otherwise exhibit no movement relative to the fourth sensor.

The method may further comprise approximating a movement of the surface between the first point and the second point based on the movement of the surface at the first point and the movement of the surface at the second point.

The method may further comprise applying a Fourier transformation to the first signal and to the second signal or to the difference signal.

The method may further comprise exerting a mechanical force on the object which causes the surface to undergo deformation due to vibrations.

Notably, all features of the system may be features of the method and vice versa.

BRIEF DESCRIPTION OF THE DRAWINGS

The foregoing aspects and many of the attendant advantages will become more readily appreciated as the same become better understood by reference to the following description of embodiments, when taken in conjunction with the accompanying drawings, wherein like reference numerals refer to like parts throughout the various views, unless otherwise specified.

Fig. 1 schematically illustrates a system for determining properties of an object.

Fig. 2 schematically illustrates a possible variant of the system shown in Fig. 1.

Fig. 3, Fig. 4, Fig. 5, and Fig. 6 schematically illustrate possible add-ons to the systems shown in Fig. 1 and Fig. 2.

Fig. 7 schematically illustrates the application of the systems shown in Fig. 1 to Fig. 6 to a violin.

Fig. 8 shows a flow chart of a method of determining properties of an object.

Notably, the drawings are not drawn to scale and unless otherwise indicated, they are merely intended to conceptually illustrate the structures and procedures described herein.

DESCRIPTION OF EMBODIMENTS

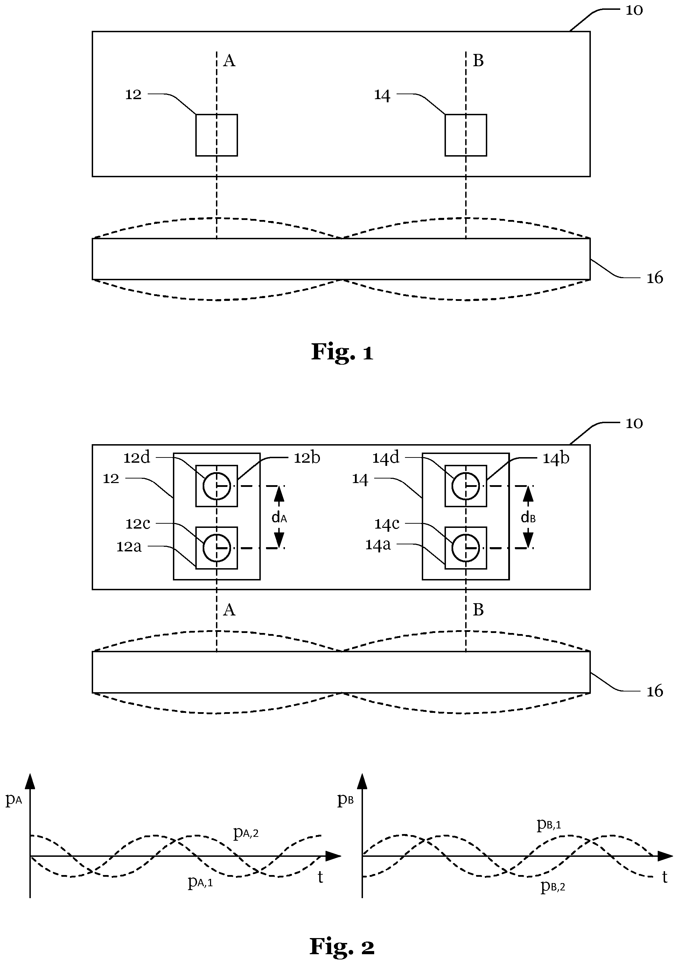

Fig. 1 shows system 10 comprising device 12 and device 14. Device 12 is configured to determine a sound particle velocity $v_A$ along line A and device 14 is configured to determine a sound particle velocity $v_B$ along line B. The sound particle velocities $v_A$ and $v_B$ are caused by vibrations of object 16. The vibrations of object 16 maybe excited by a transducer (not shown) which may be controlled by system 10. The vibrations of object 16 may also be the result of the use of object 16 or of its operation.

System 10 may use the sound particle velocities $v_A$ and $v_B$ to determine the movement of the surface (along lines A and B, respectively) by integrating the sound particle velocities $v_A$ and $v_B$ over time.

$$s_A(t_1) = \int_0^{t_1} v_A(t)\ dt$$

$$s_B(t_1) = \int_0^{t_1} v_B(t)\ dt$$

As schematically illustrated in Fig. 2, the sound particle velocities $v_A$ and $v_B$ may be determined by acoustic pressure sensors 12a, 12b, 14a, and 14b. Acoustic pressure sensors 12a and 12b may have membranes 12c and 12d which are parallel to each other and to line A. Acoustic pressure sensors 14a and 14b may have membranes 14c and 14d which are parallel to each other and to line B. Moreover, membranes 12c, 12d, 14c, 14d may be parallel to each other and line A may be parallel to line B.

For example, the derivative of the sound particle velocities $v_A$ may be approximated by dividing the difference in sound pressure $p_A$ at sensor 12a and sensor 12b (i.e., the difference signal $p_{A,2} - p_{A,1}$) by the distance $d_A$ between sensor 12a and sensor 12b (along line A) and the density $\rho$ of the medium (e.g., ambient air) through which the sound waves travel along line A. Analogously, the derivative of the sound particle velocities $v_B$ may be approximated by dividing the difference in sound pressure $p_B$ at sensor 14a and sensor 14b (i.e., the difference signal $p_{B,2} - p_{B,1}$) by the distance $d_B$ between sensor 14a and sensor 14b (along line B) and the density $\rho$ of the medium (e.g., ambient air) through which the sound waves travel along line B.

$$\frac{dv_A}{dt} \approx -\frac{1}{\rho} \cdot \frac{p_{A,2} - p_{A,1}}{d_A}$$

$$\frac{dv_B}{dt} \approx -\frac{1}{\rho} \cdot \frac{p_{B,2} - p_{B,1}}{d_B}$$

By integrating $\frac{dv_A}{dt}$ and $\frac{dv_B}{dt}$ over time, system 10 may determine the sound particle velocities $v_A$ and $v_B$.

$$v_A(t_2) \approx -\frac{1}{\rho d_A} \int_0^{t_2} \left( p_{A,1}(t) - p_{A,2}(t) \right) dt$$

$$v_B(t_2) \approx -\frac{1}{\rho d_B} \int_0^{t_2} \left( p_{B,1}(t) - p_{B,2}(t) \right) dt$$

The sound particle velocities $v_A$ and $v_B$ may then be used to determine the movement of the surface (along lines A and B, respectively) by integration over time as described above.

The determined movement may then be used to determine further properties of object 16 such as a vibrational pattern or physical properties of object 16 such as a modulus of elasticity. The determined movement may also be used to detect defects, as an area close to a defect may exhibit a movement that deviates from an expected movement.

System 10 may be calibrated by exposing system 10 to a sound field of known properties. For example, system 10 may be placed in a tube in which standing waves are produced by means of a loud-speaker. System 10 may also be calibrated using object 16 if object 16 exhibits a stable reproducible vibrational pattern. System 10 may also be calibrated based on the observation that the mean of the movement of the surface of object 16 must equal zero.

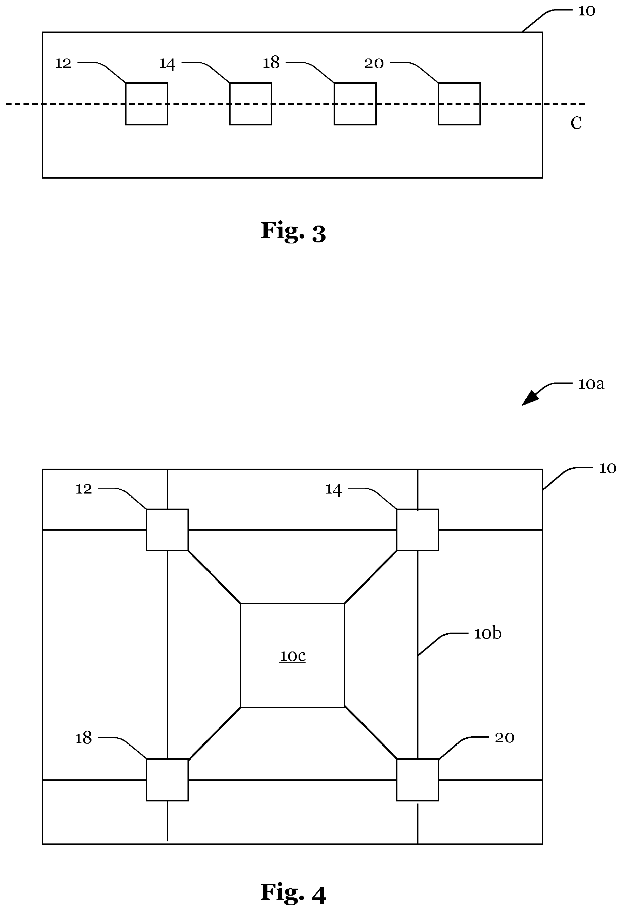

As illustrated in Fig. 3, system 10 may further comprise two additional devices 18 and 20 which allow for a simultaneous determination of the movement of the surface at different surface areas along an axis C of object 16. Moreover, as illustrated in Fig. 4, additional devices 18 and 20 may be used to establish a two-dimensional measurement grid 10a. Measurement grid 10a may comprise devices 12, 14, 18 and 20 mounted to a common frame 10b and optionally sharing circuitry such as a processor 10c for the determination of the movement of the surface of object 16 (not shown).

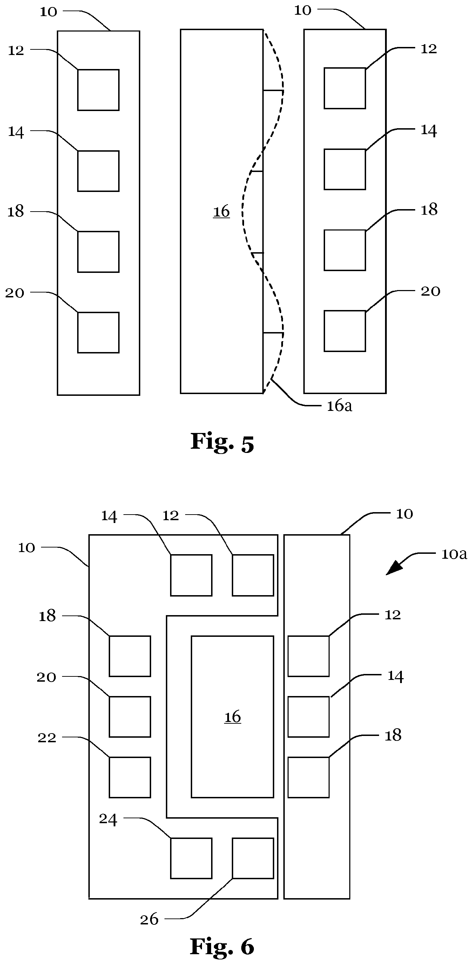

As illustrated in Fig. 5, two systems 10 may be used to simultaneously determine the movement of the surface on different sides of object 16. Depending on the number of devices 12, 14, 18, and 20 and the required accuracy, devices 12, 14, 18, and 20 of (one or more) systems 10 may also be used to interpolate the movement of a part of (or the whole surface of) object 16 based on the determined movement of the surface areas monitored by devices 12, 14, 18, and 20. For example, system 10 may be used to determine the movement of the surface (on the right side) of object 16 and to interpolate a time-dependent surface profile 16a (or a time-dependent velocity profile) based on the determined movement of the surface areas (on the right side) monitored by devices 12, 14, 18, and 20.

As illustrated in Fig. 6, object 16 may be surrounded or enclosed by measurement grid 10a formed by devices 12, 14, 18, 20, 22, 24, and 26 (such that the whole outer surface of object 16 can be monitored).

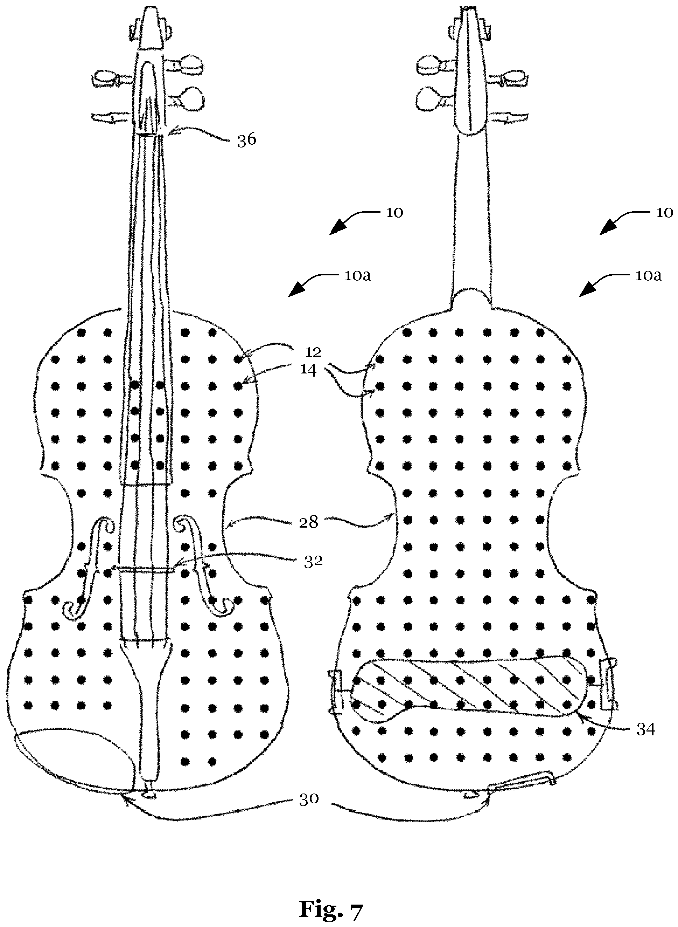

As schematically illustrated in Fig. 7, measurement grid 10a established by one or more systems 10 may also be used to determine properties (such as vibrational characteristics) of a musical instrument such as violin 28. Measurement grid 10a may cover substantially the whole surface of violin 28 except for chin rest 30 and a zone near bridge 32 to allow a musician to play violin 28 during the determination. Measurement grid 10a may be attached to chin rest 30 and shoulder pad 34 to minimize adverse effects on the vibrational characteristic of violin 28. Measurement grid 10a may be further decoupled from violin 28 by attaching measurement grid 10a to chin rest 30 and shoulder pad 34 through dampers. In addition, different harmonics may be separately analyzed by applying a Fourier transformation to the signals provided by devices 12 and 14.

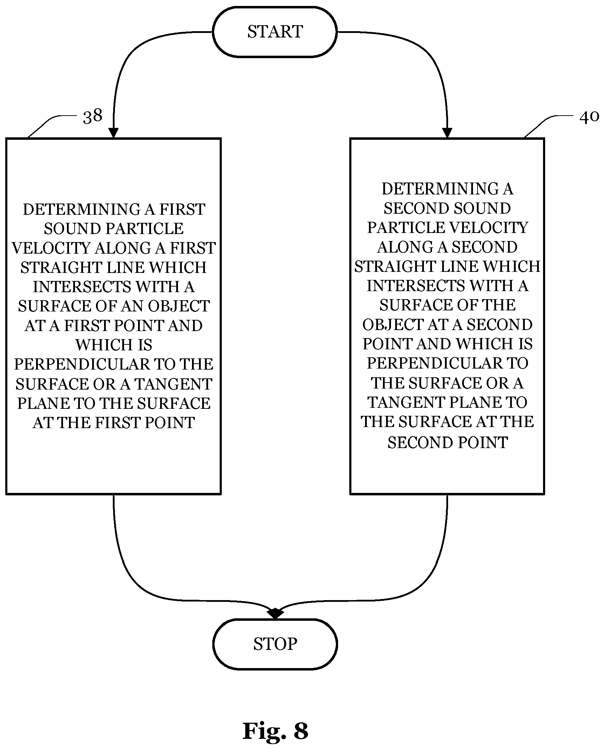

Fig. 8 shows a flow chart of a method of determining properties of object 16 (e.g., violin 28). The method is based on the concurrent execution of steps 38 and 40 which comprise determining the sound particle velocity $v_A$ along line A and determining the sound particle velocity $v_B$ along a line B. As described above, the sound particle velocities $v_A$, $v_B$ may be used to determine the movement of the surface of object 16 (and further properties of object 16). Notably, if the vibrational pattern is stable, different surface areas of object 16 may also be scanned consecutively. In this case, system 10 would only require (a single) device 12. However, having multiple devices 12, 14, 18, 20, 22, 24, and 26 may still be preferred to speed-up the scanning process.

**REFERENCE SIGNS LIST**

| | |
|---|---|
| 10 | system |
| 10a | measurement grid |
| 10b | frame |
| 10C | processor |
| 12 | (first) device |
| 12a | (first) sensor |
| 12b | (second) sensor |
| 12c | (first) membrane |
| 12d | (second) membrane |
| 14 | (second) device |
| 14a | (third) sensor |
| 14b | (fourth) sensor |
| 14c | (third) membrane |

14d  (fourth) membrane
16   object
16a  (time-dependent) surface profile (interpolated)
18   (third) device
20   (fourth) device
22   (fifth) device
24   (sixth) device
26   (seventh) device
28   violin
30   chin rest
32   bridge
34   shoulder pad
36   nut
38   step
40   step
A    (first straight) line
B    (second straight) line
C    axis

**Claims**

1. A system (10) for determining properties of an object, the system (10) comprising:

   a first device (12) which is configured to determine a first sound particle velocity along a first straight line (A), the first straight line (A) intersecting with a surface of the object (16) at a first point and being perpendicular to the surface or to a tangent plane to the surface at the first point; and
   a second device (14) which is configured to determine a second sound particle velocity along a second straight line (B), the second straight line (B) intersecting with a surface of the object (16) at a second point and being perpendicular to the surface or to a tangent plane to the surface at the second point.

2. The system (10) of claim 1, wherein the first device (12) comprises a first acoustic sensor (12a) and a second acoustic sensor (12b), a first signal provided by the first acoustic sensor (12a) being indicative of a pressure exerted on the first acoustic sensor (12a) and a second signal provided by the second acoustic sensor (12b) being indicative of a pressure exerted on the second acoustic sensor (12b).

3. The system (10) of claim 2, the first device (12) comprising circuitry to derive a first difference signal based on the first signal and the second signal.

4. The system (10) of claim 3, the system (10) being configured to determine a movement of the surface at the first point based on the first difference signal.

5. The system (10) of one of the preceding claims, wherein the second device (14) comprises a third acoustic sensor (14a) and a fourth acoustic sensor (14b), a third signal provided by the third acoustic sensor (14a) being indicative of a pressure exerted on the third acoustic sensor (14a) and a fourth signal provided by the fourth acoustic sensor (14b) being indicative of a pressure exerted on the fourth acoustic sensor (14b), the second device (14) comprising circuitry to derive a second difference signal based on the third signal and the fourth signal, and the system (10) being further configured to determine a movement of the surface at the second point based on the second difference signal.

6. The system (10) of claim 5, wherein the system (10) is further configured to approximate a movement of the surface between the first point and the second point based on the movement of the surface at the first point and the movement of the surface at the second point.

7. The system (10) of claim 2 or 3, the system (10) being configured to apply a Fourier transformation to the first signal and to the second signal or to the difference signal.

8. A method of determining properties of an object (16), the method comprising:

   determining (38) a first sound particle velocity along a first straight line (A) which intersects with a surface of the object (16) at a first point, and which is perpendicular to the surface or to a tangent plane to the surface at the first point; and
   determining (40) a second sound particle velocity along a second straight line (B) which intersects with a surface of the object (16) at a second point, and which is perpendicular to the surface or to a tangent plane to the surface at the second point.

9. The method of claim 8, wherein determining the first sound particle velocity along the first straight line (A) comprises providing a first acoustic sensor (12a) and a second acoustic sensor (12b), a first signal provided by the first acoustic sensor (12a) being indicative of a pressure exerted on the first acoustic sensor (12a) and a second signal provided by the second acoustic sensor (12b) being indicative of a pressure exerted on the second acoustic sensor (12b).

10. The method of claim 9, further comprising:

    deriving a first difference signal based on the first signal and the second signal.

11. The method of claim 10, further comprising:
    determining a movement of the surface at the first

**EP 4 083 586 A1**

point based on the first difference signal.

**12.** The method of one of claims 8 to 11, wherein determining the second sound particle velocity along the second straight line (B) comprises providing a third acoustic sensor (14a) and a fourth acoustic sensor (14b), a third signal provided by the third acoustic sensor (14a) being indicative of a pressure exerted on the third acoustic sensor (14a) and a fourth signal provided by the fourth acoustic sensor (14b) being indicative of a pressure exerted on the fourth acoustic sensor (14b), and the method further comprises deriving a second difference signal based on the third signal and the fourth signal, and determining a movement of the surface at the second point based on the second difference signal.

**13.** The method of claim 12, further comprising: approximating a movement of the surface between the first point and the second point based on the movement of the surface at the first point and the movement of the surface at the second point.

**14.** The method of claim 9 or 10, further comprising: applying a Fourier transformation to the first signal and to the second signal or to the difference signal.

**15.** The method of one of claims 8 to 14, further comprising: exerting a mechanical force on the object (16) which causes the surface to undergo deformation due to vibrations.

**Fig. 1**

**Fig. 2**

10

12   14   18   20

C

**Fig. 3**

10a

10

12   14

10b

10c

18   20

**Fig. 4**

**Fig. 5**

**Fig. 6**

**Fig. 7**

START

38

DETERMINING A FIRST SOUND PARTICLE VELOCITY ALONG A FIRST STRAIGHT LINE WHICH INTERSECTS WITH A SURFACE OF AN OBJECT AT A FIRST POINT AND WHICH IS PERPENDICULAR TO THE SURFACE OR A TANGENT PLANE TO THE SURFACE AT THE FIRST POINT

40

DETERMINING A SECOND SOUND PARTICLE VELOCITY ALONG A SECOND STRAIGHT LINE WHICH INTERSECTS WITH A SURFACE OF THE OBJECT AT A SECOND POINT AND WHICH IS PERPENDICULAR TO THE SURFACE OR A TANGENT PLANE TO THE SURFACE AT THE SECOND POINT

STOP

**Fig. 8**

Europäisches
Patentamt

European
Patent Office

Office européen
des brevets

# EUROPEAN SEARCH REPORT

Application Number

EP 21 17 1732

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 397 187 A (STRIBLING JOHN L) 9 August 1983 (1983-08-09) * figures 1-3 * * column 1, line 7 - line 12 * * column 3, line 3 - line 17 * * column 4, line 12 - column 5, line 3 * ----- | 1-14 | INV. G01H5/00 G01N29/04 |
| X | US 2006/070445 A1 (JUBER FRANK [DE] ET AL) 6 April 2006 (2006-04-06) * figures 1, 4 * * paragraph [0001] * * paragraph [0026] * ----- | 1-14 | |
| X | US 2007/068255 A1 (HALD JORGEN [DK]) 29 March 2007 (2007-03-29) * figure 2 * * paragraph [0047] * ----- | 1,2,8,9 | |
| X | GB 2 537 365 A (FUCHS ANTON [AT]; JAN REJLEK [AT] ET AL.) 19 October 2016 (2016-10-19) * claim 1 * * figures 3, 4 * * page 6, Par. Device for experimental characterisation of sound insulation materials * ----- | 1,8,15 | TECHNICAL FIELDS SEARCHED (IPC) G01H G01N |

The present search report has been drawn up for all claims

| Place of search | Date of completion of the search | Examiner |
|---|---|---|
| The Hague | 5 October 2021 | Lameloise, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 17 1732

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2021

| Patent document cited in search report | | Publication date | Patent family member(s) | | | Publication date |
|---|---|---|---|---|---|---|
| US 4397187 | A | 09-08-1983 | CA | 1182898 | A | 19-02-1985 |
| | | | US | 4397187 | A | 09-08-1983 |
| US 2006070445 | A1 | 06-04-2006 | DE | 102004046200 | A1 | 06-04-2006 |
| | | | JP | 2006101515 | A | 13-04-2006 |
| | | | US | 2006070445 | A1 | 06-04-2006 |
| US 2007068255 | A1 | 29-03-2007 | EP | 1682856 | A1 | 26-07-2006 |
| | | | JP | 4527123 | B2 | 18-08-2010 |
| | | | JP | 2007512510 | A | 17-05-2007 |
| | | | US | 2007068255 | A1 | 29-03-2007 |
| | | | WO | 2005045376 | A1 | 19-05-2005 |
| GB 2537365 | A | 19-10-2016 | NONE | | | |

EPO FORM P0459

For more details about this annex : see Official Journal of the European Patent Office, No. 12/82